# FASCICULE DE BREVET EUROPEEN

(11) **EP 4 004 409 B1**
(45) Date de publication et mention de la délivrance du brevet: **03.09.2025**
(21) Numéro de dépôt: 20753999.0
(22) Date de dépôt: 20.07.2020
(51) Int. Cl.: F16J 15/02, F16J 15/46, B64D 29/00, F02K 1/80

(54) **ENSEMBLE PROPULSIF POUR AÉRONEF COMPRENANT UN JOINT D'ÉTANCHÉITÉ**
ANTRIEBSEINHEIT FÜR EIN FLUGZEUG MIT EINER DICHTUNG
PROPULSION ASSEMBLY FOR AIRCRAFT COMPRISING A SEAL

(30) Priorité: 22.07.2019 FR 1908303
(43) Date de publication de la demande: 01.06.2022
(73) Titulaire: Safran Nacelles, 76700 Gonfreville l'Orcher (FR)
(72) Inventeur: RENAULT, Cédric, 77550 MOISSY CRAMAYEL (FR); BONNY, Arnaud, 77550 MOISSY CRAMAYEL (FR)
(74) Mandataire: Germain Maureau
(86) Numéro de dépôt international: PCT/FR2020/051307
(87) Numéro de publication internationale: WO 2021/014085

(56) Documents cités:
- WO-A1-2009/125794
- WO-A1-2015/036717
- FR-A1- 3 018 329
- US-A- 5 687 976
- US-A1- 2006 220 328

## Description

L'invention concerne un ensemble propulsif pour aéronef comprenant un joint d'étanchéité destiné à assurer l'étanchéité entre une pièce fixe et une pièce mobile tel qu'entre un turboréacteur et une nacelle de l'aéronef.

Un aéronef est propulsé par un ou plusieurs turboréacteurs logés chacun dans une nacelle ; chaque nacelle abrite également un ensemble de dispositifs d'actionnement annexes liés à son fonctionnement et assurant diverses fonctions lorsque le turboréacteur est en fonctionnement ou à l'arrêt.

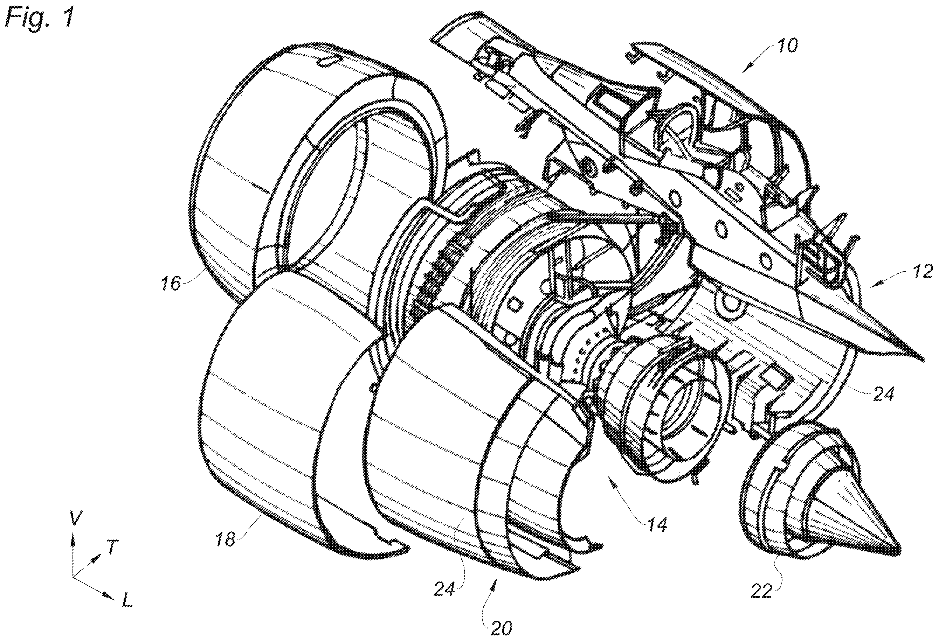

Comme le montre la figure 1, une nacelle présente généralement une structure tubulaire comprenant :
- une entrée d'air 16 en avant d'un turboréacteur 14,
- une section médiane 18 destinée à entourer une soufflante du turboréacteur 14,
- une section arrière 20 pouvant éventuellement embarquer des moyens d'inversion de poussée et destinée à entourer la chambre de combustion du turboréacteur 14, et
- une tuyère d'éjection 22 dont la sortie est située en aval du turboréacteur.

Les nacelles modernes sont souvent destinées à abriter un turboréacteur double flux apte à générer par l'intermédiaire des pales de la soufflante en rotation un flux d'air chaud (également appelé flux primaire) issu de la chambre de combustion du turboréacteur. Une nacelle présente généralement une structure externe, dite Outer Fixed Structure (OFS), qui définit, avec une structure interne concentrique, dite Inner Fixed Structure (IFS), comportant un capot entourant la structure du turboréacteur proprement dite en arrière de la soufflante, un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou d'un mât rattaché au turboréacteur ou à la nacelle.

La section arrière de la structure externe de la nacelle est usuellement formée de deux capots (référence 24 sur la figure 1 de la présente demande) de forme sensiblement hémicylindrique, de part et d'autre d'un plan vertical longitudinal de symétrie de la nacelle, et montés mobiles de manière à pouvoir se déployer entre une position de fonctionnement et une position de maintenance qui donne accès au turboréacteur.

Les deux capots sont généralement montés pivotants autour d'un axe longitudinal formant charnière en partie supérieure de l'inverseur (ligne de jonction supérieure, à 12 heures).

Les capots sont maintenus en position de fermeture au moyen de verrous disposés le long d'une ligne de jonction située en partie inférieure (à 6 heures).

On constate donc qu'un ensemble propulsif d'avion intègre des sous-ensembles fonctionnels qui possèdent des mouvements relatifs et entre lesquels il convient de gérer l'étanchéité.

En particulier, il importe que les deux capots qui entourent le turboréacteur et qui délimitent la veine secondaire sur une partie de son parcours canalisent cette veine secondaire sans fuite vers le turboréacteur.

Il est particulièrement important de créer une barrière d'étanchéité entre la partie amont de chaque capot et le turboréacteur pour prévenir toute fuite de la veine secondaire vers le turboréacteur. Une telle fuite est particulièrement néfaste.

En effet, la nacelle est conçue et dimensionnée pour une veine secondaire canalisée qui exerce une pression sur sa structure interne. En revanche, la nacelle n'est pas conçue pour faire face à un écopage du flux constituant la veine secondaire vers le turboréacteur. Un écopage important peut conduire à un arrachement de la structure interne de la nacelle.

Cependant, l'étanchéité entre les deux capots et le turboréacteur présente une problématique particulière.

Tout d'abord, les deux capots sont chacun animés de mouvements axiaux et radiaux par rapport au turboréacteur.

Ensuite, compte tenu de la grande dimension des pièces, les deux capots peuvent en fonctionnement connaître des déplacements importants. Un joint interposé entre un capot et le turboréacteur doit donc créer une barrière d'étanchéité quelle que soit la position relative d'un capot par rapport au turboréacteur.

De plus, il peut être souhaitable d'empêcher la propagation d'un éventuel feu entre les pièces d'une nacelle, l'étanchéité entre lesdites pièces participant à ralentir voire éviter la propagation de ce feu.

Or, compte tenu du coefficient d'écrasement des joints connus et de l'amplitude du déplacement dont il convient d'assurer l'étanchéité, il s'avère que les joints connus à section transversale tubulaire généralement en oméga ne peuvent pas valablement assurer cette étanchéité.

En effet, ce type de joint en oméga devrait présenter un diamètre incompatible avec l'espace délimité entre les capots et le turboréacteur.

On connaît un type de joint à grande amplitude de déplacement, décrit et représenté dans le document FR2920215, qui permet d'assurer une étanchéité efficace.

A cet effet, le joint décrit dans le document FR2920215 comporte un corps de section radiale globalement cylindrique et deux lèvres souples qui s'étendent radialement depuis une génératrice du corps cylindrique.

On connaît également du document antérieur WO2015036717 un type de joint à grande amplitude d'écrasement, ce joint comporte un corps de section radiale globalement cylindrique et une excroissance formant une première et deuxième lèvre s'étendant radialement et délimitant une cavité interne.

Un inconvénient de ce type de joint apparait au moment de leur compression lors du déplacement des capots mobiles. En position comprimée, une sollicitation transversale résultant d'une différence de pression entre les zones situées de part et d'autre du joint est appliquée au joint. Cette sollicitation transversale appliquée sur le joint engendre un déplacement du joint pouvant aboutir à un basculement total de ce dernier qui n'assure alors plus sa fonction d'étanchéité.

La présente invention a pour but de remédier à tout ou partie des inconvénients évoqués précédemment.

Un but de la présente invention est d'améliorer l'étanchéité entre un capot d'une partie arrière d'une nacelle et d'un turboréacteur dans un ensemble propulsif d'aéronef lorsque ceux-ci sont susceptibles de connaître des déplacements relatifs de grandes amplitudes.

Un autre but de la présente invention est de supprimer les risques de basculement du joint au moment de sa compression.

A cet effet, l'invention propose un ensemble propulsif pour aéronef comprenant une nacelle entourant un turboréacteur, ladite nacelle comprenant:
- une entrée d'air en avant du turboréacteur,
- une section médiane entourant une soufflante du turboréacteur,
- une section arrière abritant des moyens d'inversion de poussée, comprenant au moins un capot mobile, ledit ensemble propulsif comprenant au moins un joint d'étanchéité interposé entre ledit capot mobile et ledit turboréacteur, le joint d'étanchéité comprenant un corps tubulaire délimitant une cavité interne interposé entre au moins une partie de fixation et une plateforme, ladite plateforme comportant une première arête latérale et une seconde arête latérale et une surface plane s'étendant depuis la première arête latérale jusqu'à la seconde arête latérale, le joint d'étanchéité comprenant une protubérance agencée sur la plateforme.

Une telle conception permet au joint d'étanchéité de former une barrière étanche entre le turboréacteur et la pièce mobile de la nacelle en cas de déplacement relatif de grande amplitude de ces deux éléments et permet d'empêcher le basculement du joint lors de sa compression, notamment lorsqu'un différentiel de pression entre les zones situées de part et d'autre du joint, est présent.

Grâce au joint de l'invention, la largeur de contact du joint est limitée à la largeur de la plateforme entre les deux arêtes latérales et n'est plus fonction de l'écrasement du joint. La largeur de contact est ainsi indépendante du niveau de compression du joint ce qui permet de garantir une surface de contact constante.

Selon une variante de réalisation, la protubérance est centrée sur la plateforme.

Selon une variante de réalisation, la protubérance présente une forme convexe. La forme est convexe par rapport à la cavité interne.

Selon une variante de réalisation, la plateforme présente une raideur supérieure à une raideur du corps tubulaire.

La raideur de la plateforme n'influençant pas la raideur globale du joint, une raideur supérieure de la plateforme permet d'augmenter la résistance au basculement du joint. Selon une variante de réalisation, la plateforme présente une largeur comprise entre une moitié d'un diamètre du corps tubulaire et un diamètre du corps tubulaire.

Selon une variante de réalisation, la plateforme présente une largeur supérieure à une moitié de diamètre du corps tubulaire.

Par diamètre on entend la plus grande largeur du corps tubulaire.

Ceci permet d'obtenir une étanchéité optimale du joint.

Selon une variante de réalisation, le corps tubulaire comprend des parois présentant une épaisseur dite première épaisseur et la plateforme présente une épaisseur dite deuxième épaisseur inférieure à ladite première épaisseur.

Selon une variante de réalisation, la plateforme présente une épaisseur deux fois inférieure à l'épaisseur des parois du corps tubulaire.

Selon une variante de réalisation, la plateforme est diamétralement opposée à au moins une partie de fixation. Cette configuration permet de mettre à profit l'élasticité du corps tubulaire.

Selon une variante de réalisation, la plateforme est inscrite dans un plan dit premier plan et la partie de fixation est inscrite dans un plan dit deuxième plan, lesdits premier plan et deuxième plan étant parallèles.

Selon une variante de réalisation, la partie de fixation comprend deux pattes latérales destinées à s'engager dans des rails en forme de C.

Selon une variante de réalisation, la plateforme et le corps tubulaire sont constitués d'un même matériau.

Selon une variante de réalisation, la plateforme est recouverte d'un matériau antifriction.

D'autres caractéristiques et avantages de l'invention apparaîtront à la lecture de la description nullement limitative qui suit et des figures annexées qui illustrent de manière schématique plusieurs modes de réalisation d'un joint d'étanchéité selon l'invention.
[Fig. 1] est une vue éclatée en perspective, qui illustre un ensemble propulsif d'aéronef comprenant une nacelle et un turboréacteur ;
[Fig. 2] est une vue partielle en perspective, qui illustre une demi section arrière d'une nacelle, montrant les emplacements des joints selon l'invention ;
[Fig. 3] est une vue agrandie de détail de la fenêtre III de la figure 2 ;
[Fig. 4] est une vue en coupe transversale d'un joint d'étanchéité de l'art antérieur ;
[Fig. 5] est une vue en coupe transversale d'un joint d'étanchéité selon un premier mode de réalisation qui ne fait pas partie de l'invention ;
[Fig. 6] est une vue en coupe transversale du joint d'étanchéité selon le premier mode de réalisation lors de sa compression ;
[Fig. 7] est une vue en coupe transversale d'un joint d'étanchéité selon une première variante de réalisation du premier mode de réalisation qui ne fait également pas partie de l'invention ;
[Fig. 8] est une vue en coupe transversale du joint d'étanchéité selon la première variante de réalisation en compression maximale ;
[Fig. 9] est une vue en coupe transversale d'un joint d'étanchéité selon une variante de réalisation de l'invention ;
[Fig. 10] est une vue en coupe transversale du joint d'étanchéité selon la variante de réalisation de l'invention en compression maximale ;
[Fig. 11] est une vue en coupe transversale d'un joint d'étanchéité selon un deuxième mode de réalisation qui ne fait pas partie de l'invention ;
[Fig. 12] est une vue en coupe transversale du joint d'étanchéité selon le deuxième mode de réalisation en compression maximale ;
[Fig. 13] est une vue en coupe transversale du joint d'étanchéité selon une variante de réalisation, qui ne fait pas partie de l'invention.
[Fig. 14] est une vue en coupe transversale du joint d'étanchéité selon une variante de réalisation, qui ne fait pas partie de l'invention.

Par souci de simplification, les éléments identiques sont repérés par des signes de référence identiques sur l'ensemble des figures.

Dans la description et les revendications, on utilisera à titre non limitatif la terminologie longitudinal, vertical et transversal en référence au trièdre L, V, T indiqué aux figures. On a représenté à la figure 1 un ensemble propulsif 10 d'aéronef comprenant une nacelle 12 et un turboréacteur 14.

La nacelle 12 comporte d'amont en aval selon le sens d'écoulement de l'air, une entrée d'air 16 agencée en avant du turboréacteur 14, une section médiane 18 destinée à entourer une soufflante du turboréacteur 14, une section arrière 20 conçue pour entourer la chambre de combustion du turboréacteur 14 et une tuyère d'éjection 22 dont la sortie est agencée en aval du turboréacteur 14.

La section arrière 20 de la nacelle 12 comporte deux capots 24 mobiles qui sont équipés chacun d'un joint d'étanchéité 1 selon l'invention.

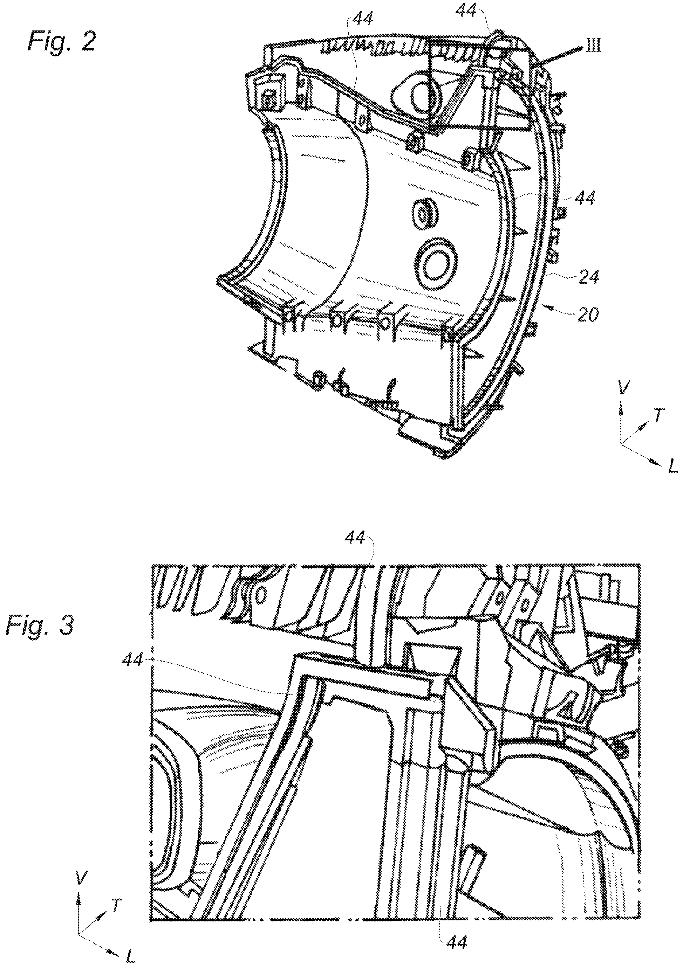

En référence à la figure 2, le joint d'étanchéité 1 est prévu pour être rapporté et collé sur une surface d'appui 44 de chaque capot arrière 24 de la section arrière 20 de la nacelle 12.

En fonctionnement, le joint d'étanchéité 1 qui est embarqué sur chacun des capots 24, vient en contact du turboréacteur 14 et, plus spécialement, vient en contact d'un carter qui entoure le compresseur du turboréacteur 14. Le joint d'étanchéité 1 est alors écrasé entre le capot 24 sur lequel il est embarqué et le carter du turboréacteur 14.

Lors du fonctionnement du turboréacteur 14, chacun des deux capots 24 peut connaître des mouvements d'amplitude importante dans une direction radiale mais également dans une direction axiale par rapport au turboréacteur 14.

A titre indicatif, on peut constater des déplacements entre un capot 24 et le turboréacteur 14 dont l'amplitude peut être de l'ordre de 20 millimètres.

Le joint d'étanchéité 1 selon l'invention permet donc de conserver en toute circonstance un contact et donc de créer une barrière étanche entre le carter du turboréacteur 14 et le capot 24 associé et ce même lorsque l'amplitude radiale est maximale.

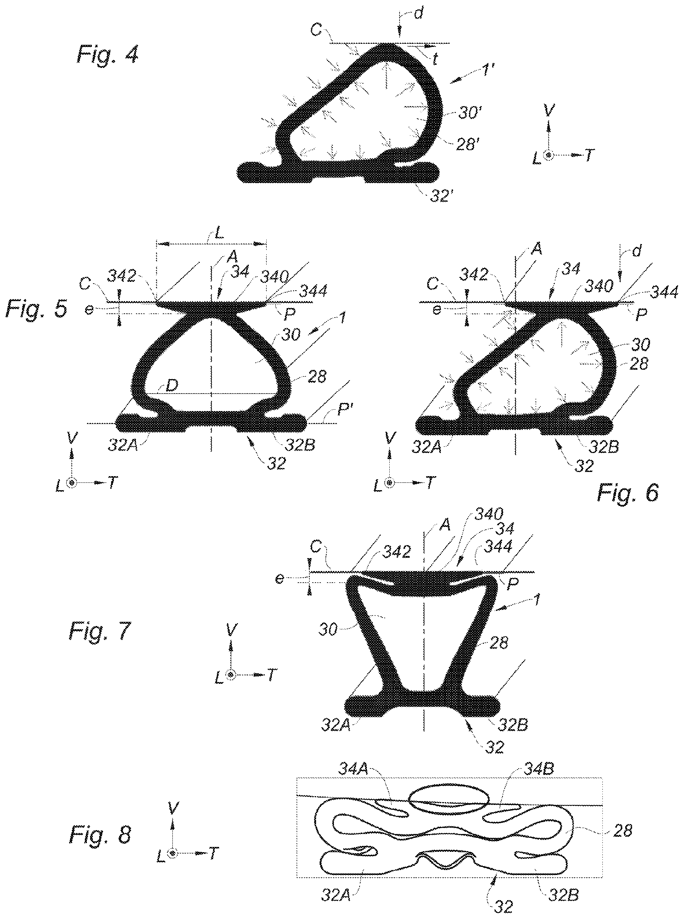

La figure 4 est une illustration schématique d'un joint 1' de l'art antérieur. Le joint 1' comporte un corps 28' à section transversale tubulaire en oméga délimitant une cavité 30' interne.

Le joint d'étanchéité 1' comprend également une partie 32' de fixation transversale solidaire du corps tubulaire 28'.

La figure 4 illustre la problématique des joints de l'art antérieur lors de leur compression par un compresseur C correspondant ici au turboréacteur ou carter du turboréacteur. Lors de la compression du joint 1' en direction de la flèche « d », une sollicitation transversale « t » due à une différence de pression entre les zones situées de part et d'autre du joint est appliquée au joint 1'. Cette sollicitation transversale « t » induit un déplacement du joint, en particulier de la partie du joint opposée à celle comprenant la partie de fixation qui n'est pas fixée mécaniquement. La sollicitation transversale peut aboutir à un basculement total du joint qui n'est alors plus en contact avec le compresseur C et qui n'assure alors plus sa fonction d'étanchéité.

La figure 5 est une illustration d'un joint d'étanchéité 1 selon un mode de réalisation qui ne fait pas partie de l'invention, au repos c'est-à-dire sur lequel aucune compression n'est appliquée.

Dans le présent exemple, le joint d'étanchéité 1 présente un axe de symétrie A. Le joint d'étanchéité 1 comporte un corps tubulaire 28 qui délimite une cavité 30 interne.

Le corps tubulaire 28 présente une section radiale de forme globalement circulaire au repos, le corps tubulaire 28 étant conçu pour se déformer par écrasement en adoptant une section radiale sensiblement ovoïde (figure 6).

Le joint d'étanchéité 1 est équipé d'une partie de fixation. Dans l'exemple des figures 5 à 12, la partie de fixation comprend une première patte latérale de fixation 32A et une deuxième patte latérale de fixation 32B agencées de part et d'autre de l'axe de symétrie A, qui sont solidaires du corps tubulaire 28 et qui présentent une section radiale globalement rectiligne. Ces pattes latérales 32A, 32B sont destinées à s'engager dans des rails en forme de C.

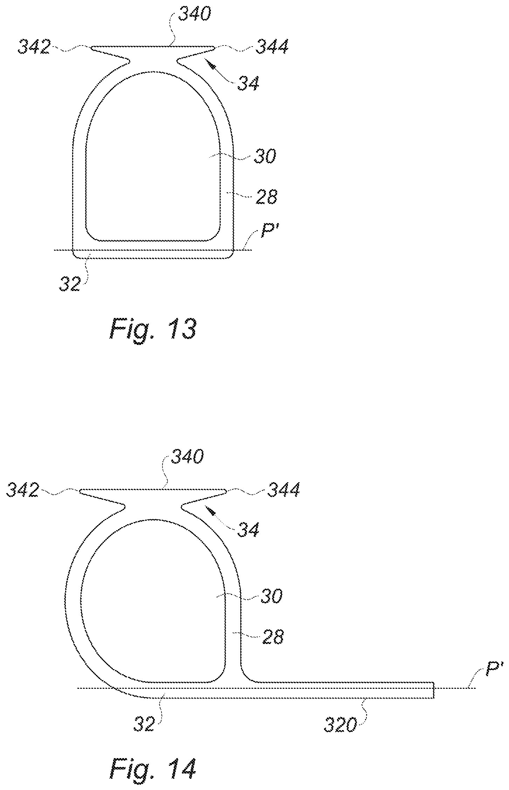

La partie de fixation n'est pas limitée à des pattes latérales et peut par exemple comprendre une bande plane unique présentant une dimension sensiblement identique au diamètre de la cavité interne 30 (figure 13) ou une bande plane unique présentant une extrémité 320 s'étendant à partie de la cavité interne 32 (figure 14). Ces bandes planes sont destinées à être fixées par des moyens connus de l'homme du métier, par collage par exemple ou par rivetage, sur une surface d'appui 44 de chaque capot arrière 24 de la section arrière 20 de la nacelle 12.

Dans les exemples représentés, la plateforme 34 est inscrite dans un plan dit premier plan P et la partie de fixation 32 est inscrite dans un plan dit deuxième plan P', ledit premier et deuxième plan étant parallèles de sorte que la plateforme et la partie de fixation sont parallèles.

Aussi, le joint d'étanchéité 1 comporte une plateforme 34 de contact surfacique.

La plateforme 34 présente une surface plane 340 s'étendant selon un plan P. Cette surface plane 340 s'étend depuis une première arête latérale 342 jusqu'à une seconde arête latérale 344 de ladite plateforme 34.

La plateforme 34 présente une première face tournée vers la cavité interne 30 et une deuxième face, opposée à la première face.

Dans ce mode de réalisation, la plateforme 34 est diamétralement opposée aux pattes latérales 32A, 32B. Il convient toutefois de noter que le joint 1 selon l'invention n'est pas limité à cette réalisation de la plateforme 34. A cet effet, la plateforme 34 peut tout à fait ne pas être diamétralement opposée aux pattes latérales 32A, 32B.

De préférence, la matière utilisée pour réaliser le joint d'étanchéité est du type silicone armé de fibres, comme des fibres de verre ou d'aramide par exemple. D'autres matériaux peuvent être néanmoins utilisés pour la réalisation du joint tels que des plis de verre, de carbone, de céramique ou de la tôle métallique.

Dans le présent exemple, le corps tubulaire 28 et la plateforme 34 sont constitués d'un même matériau c'est-à-dire qu'ils sont réalisés dans le même matériau.

Dans une variante non représentée, le corps tubulaire 28 et la plateforme 34 peuvent être réalisés dans des matériaux différents.

Dans le présent exemple, la plateforme 34 est recouverte d'un matériau antifriction c'est-à-dire un matériau à faible coefficient de friction tel que par exemple un pli Nomex.

La plateforme a pour fonction d'ancrer le joint de manière à empêcher un glissement du joint et une perte d'adhérence du joint au niveau du compresseur C. La plateforme permet de conserver en toute circonstance un contact et donc créer une barrière étanche entre le carter du turboréacteur et le capot.

Ainsi grâce à la plateforme 34, le risque de basculement du joint lors de la compression (figure 6) de ce dernier en direction de la flèche « d » est supprimé.

De plus, la largeur de contact du joint 1 avec le compresseur C est constante puisqu'elle est limitée à la largeur de la plateforme 34.

La largeur L de la plateforme est définie par la distance entre les deux arêtes latérales 342, 344.

La largeur de contact n'est plus fonction du niveau de compression du joint (figure 4).

De préférence, la raideur de la plateforme 34 est supérieure à la raideur du corps tubulaire dudit joint de manière à augmenter la résistance au basculement du joint 1.

Dans le présent exemple, la plateforme 34 présente une largeur L supérieure à une moitié de diamètre D du corps tubulaire. Dans une variante de réalisation (non représentée), la plateforme 34 présente une largeur égale à une moitié de diamètre du corps tubulaire 28

De préférence, la plateforme 34 ne présentera pas une largeur L supérieure au diamètre D du corps tubulaire 28 pour des raisons d'environnement géométrique. Cela peut néanmoins être le cas lorsque l'environnement le permet.

La plateforme 34 présente une épaisseur « e » inférieure à deux fois l'épaisseur des parois du corps tubulaire 28.

L'épaisseur de la plateforme correspond à l'épaisseur « e » déterminée au niveau de l'intersection avec l'axe de symétrie A.

La plateforme 34 est conçue pour être agencée sur tout type de joint, par exemple un joint présentant un ratio hauteur/largeur supérieur à 1 (figures 7 à 12).

La figure 7 représente un joint 1 de type Slim Omega comprenant la plateforme 34, dans un état de compression minimum.

La figure 8 représente le joint 1 dans un état de compression maximum. Dans cet état de compression, la plateforme présente deux surfaces de contact 34 A et 34 B.

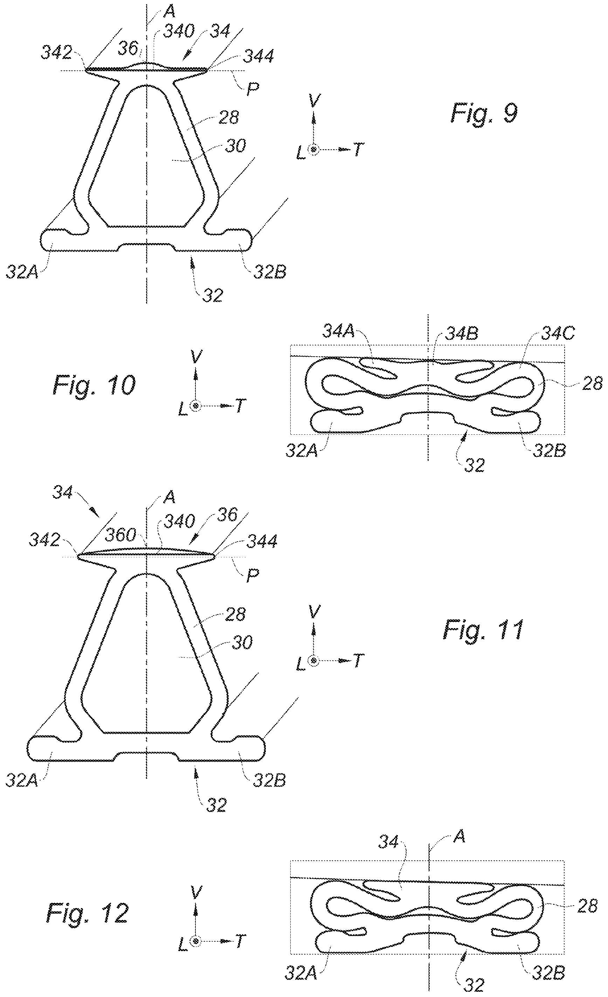

La figure 9 représente le joint 1 selon une variante de réalisation de l'invention dans laquelle le joint d'étanchéité comprend une protubérance 36 agencée sur la plateforme. La section radiale de la plateforme présente une protubérance 36 agencée sur la face de la plateforme opposée à la face tournée vers la cavité 30. La protubérance 36 s'étend depuis la face opposée, dans une direction opposée à la face tournée vers la cavité interne 30. Ainsi selon le mode de réalisation de l'invention, le joint comprend une plateforme 34 présentant une surface plane depuis une première arrête jusqu'à une deuxième arrête, et le joint comprend une protubérance 36 agencée sur la plateforme.

Dans le présent exemple, la protubérance 36 est centrée sur l'axe de symétrie A, c'est-à-dire que la protubérance 36 est agencé au milieu de la surface de la plateforme 34. En d'autres termes, la protubérance 36 est centrée sur la plateforme 34.

Dans un mode de réalisation non représenté, la protubérance peut être agencée à distance de l'axe de symétrie A.

En position de compression maximale (figure 10), la plateforme 34 présente trois surfaces de contact 34A, 34 B et 34 C.

La figure 11 représente le joint 1 selon un mode réalisation qui ne fait pas partie de l'invention dans laquelle la protubérance 36 s'étend entre les deux arêtes latérales 342, 344, c'est-à-dire que la protubérance s'étend depuis la première arête latérale 342 jusqu'à la seconde arête latérale 344. La protubérance présente un sommet 360 agencé à l'intersection avec l'axe de symétrie A. On peut noter que dans cette forme de réalisation, les arêtes 342, 344 présentent une forme arrondie.

La protubérance 36 présente un sommet 360 centré sur la plateforme 34. Dans le présent exemple, la protubérance présente une forme convexe. En position de compression maximale (figure 12), la plateforme 34 présente une surface de contact unique.

L'homme du métier saura choisir la configuration de la plateforme en fonction du profil d'étanchéité recherché.

Bien évidemment, l'invention n'est pas limitée à l'exemple qui vient d'être décrit et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. On comprendra alors que la forme géométrique du corps tubulaire 28 du joint d'étanchéité 1 n'est pas limitée aux exemples décrits précédemment. De la même manière, le joint d'étanchéité peut ne pas présenter d'axe de symétrie.

Ainsi, grâce au joint d'étanchéité selon l'invention, l'étanchéité est améliorée, les risques de basculement du joint et de perte d'étanchéité sont supprimés et la fabrication du joint est simplifiée.

## Revendications

1. Ensemble propulsif (10) pour aéronef comprenant une nacelle (12) entourant un turboréacteur (14), ladite nacelle comprenant :
- une entrée d'air (16) en avant du turboréacteur (14),
- une section médiane (18) entourant une soufflante du turboréacteur (14),
- une section arrière (20) abritant des moyens d'inversion de poussée, comprenant au moins un capot mobile (24),
ledit ensemble propulsif (10) comprenant au moins un joint d'étanchéité (1) interposé entre ledit capot mobile (24) et ledit turboréacteur (14), le joint d'étanchéité comprenant un corps tubulaire (28) délimitant une cavité interne (30) interposé entre au moins une partie de fixation (32) et une plateforme (34), **caractérisé par**
ladite plateforme (34) comportant une première arête latérale (342) et une seconde arête latérale (344) et une surface plane (340) s'étendant depuis la première arête latérale (342) jusqu'à la seconde arête latérale (344), le joint d'étanchéité (1) comprenant une protubérance (36) agencée sur la plateforme.

2. Ensemble propulsif (10) selon la revendication précédente, **caractérisé en ce que** la protubérance (36) est centrée sur la plateforme (34).

3. Ensemble propulsif (10) selon l'une des revendications 1 à 2 **caractérisé en ce que** la protubérance (36) présente une forme convexe.

4. Ensemble propulsif (10) selon l'une quelconque des revendications précédentes, **caractérisé en ce que** la plateforme (34) présente une raideur supérieure à une raideur du corps tubulaire.

5. Ensemble propulsif (10) selon l'une quelconque des revendications précédente, **caractérisé en ce que** la plateforme (34) présente une largeur supérieure à une moitié de diamètre (D) du corps tubulaire (28).

6. Ensemble propulsif (10) selon l'une quelconques des revendications précédentes, **caractérisé en ce que** le corps tubulaire (28) comprend des parois présentant une épaisseur dite première épaisseur et **en ce que** la plateforme (34) présente une épaisseur dite deuxième épaisseur inférieure à ladite première épaisseur.

7. Ensemble propulsif (10) selon l'une quelconque des revendications précédentes, **caractérisé en ce que** la plateforme (34) est recouverte d'un matériau antifriction.

8. Ensemble propulsif (10) selon l'une quelconque des revendications précédentes **caractérisé en ce que** la plateforme (34) est inscrite dans un plan dit premier plan (P) et la partie de fixation (32) est inscrite dans un plan dit deuxième plan (P'), lesdits premier plan et deuxième plan étant parallèles.

9. Ensemble propulsif (10) selon la revendication 8 **caractérisé en ce que** la partie de fixation (32) comprend deux pattes latérales (32A, 32B) destinées à s'engager dans des rails en forme de C.

## Patentansprüche

1. Antriebseinheit (10) für Flugzeuge, umfassend eine Gondel (12), die ein Turbotriebwerk (14) umgibt, wobei die Gondel Folgendes umfasst:
- einen Lufteinlass (16) vor dem Turbotriebwerk (14),
- einen Mittelabschnitt (18), der ein Gebläse des Turbotriebwerks (14) umgibt,
- einen hinteren Abschnitt (20), der Schubumkehrmittel beherbergt und mindestens eine bewegliche Haube (24) umfasst,
wobei die Antriebseinheit (10) mindestens eine Dichtung (1) umfasst, die zwischen der beweglichen Haube (24) und dem Turbotriebwerk (14) eingefügt ist, wobei die Dichtung einen schlauchförmigen Körper (28) umfasst, der einen inneren Hohlraum (30) begrenzt, der zwischen mindestens einem Befestigungsteil (32) und einer Plattform (34) eingefügt ist, **gekennzeichnet durch** die Plattform (34), die eine erste Seitenkante (342) und eine zweite Seitenkante (344) und eine ebene Oberfläche (340) umfasst, die sich von der ersten Seitenkante (342) bis zur zweiten Seitenkante (344) erstreckt, wobei die Dichtung (1) einen an der Plattform angeordnete Vorsprung (36) umfasst.

2. Antriebseinheit (10) nach dem vorhergehenden Anspruch, **dadurch gekennzeichnet, dass** der Vorsprung (36) auf der Plattform (34) zentriert ist.

3. Antriebseinheit (10) nach einem der Ansprüche 1 bis 2, **dadurch gekennzeichnet, dass** der Vorsprung (36) eine konvexe Form aufweist.

4. Antriebseinheit (10) nach einem der vorhergehenden Ansprüche, **dadurch gekennzeichnet, dass** die Plattform (34) eine höhere Steifigkeit aufweist als eine Steifigkeit des schlauchförmigen Körpers.

5. Antriebseinheit (10) nach einem der vorhergehenden Ansprüche, **dadurch gekennzeichnet, dass** die Plattform (34) eine Breite aufweist, die größer als die Hälfte des Durchmessers (D) des schlauchförmigen Körpers (28) ist.

6. Antriebseinheit (10) nach einem der vorhergehenden Ansprüche, **dadurch gekennzeichnet, dass** der schlauchförmige Körper (28) Wände mit einer Dicke aufweist, die als erste Dicke bezeichnet wird, und dass die Plattform (34) eine Dicke aufweist, die als zweite Dicke bezeichnet wird und kleiner als die erste Dicke ist.

7. Antriebseinheit (10) nach einem der vorhergehenden Ansprüche, **dadurch gekennzeichnet, dass** die Plattform (34) mit einem Reibungsmaterial überzogen ist.

8. Antriebseinheit (10) nach einem der vorhergehenden Ansprüche, **dadurch gekennzeichnet, dass** die Plattform (34) in einer Ebene, die als erste Ebene (P) bezeichnet wird, vorgesehen ist und das Befestigungsteil (32) in einer Ebene, die als zweite Ebene (P') bezeichnet wird, vorgesehen ist, wobei die erste Ebene und die zweite Ebene parallel sind.

9. Antriebseinheit (10) nach Anspruch 8, **dadurch gekennzeichnet, dass** das Befestigungsteil (32) zwei seitliche Laschen (32A, 32B) umfasst, die dazu bestimmt sind, in C-förmige Schienen einzugreifen.

## Claims

1. A propulsion unit (10) for an aircraft comprising a nacelle (12) surrounding a turbojet engine (14), said nacelle comprising:
- an air inlet (16) in front of the turbojet engine (14),
- a middle section (18) surrounding a fan of the turbojet engine (14),
- a rear section (20) accommodating thrust reverser means, comprising at least one movable cowl (24),
said propulsion unit (10) comprising at least one seal (1) interposed between said movable cowl (24) and said turbojet engine (14), the seal comprising a tubular body (28) delimiting an inner cavity (30) interposed between at least one fixing part (32) and one platform (34),
**characterized by** said platform (34) including a first lateral edge (342) and a second lateral edge (344) and a planar surface (340) extending from the first lateral edge (342) to the second lateral edge (344), the seal (1) comprising a protuberance (36) arranged on the platform.

2. The propulsion unit (10) according to the preceding claim, **characterized in that** the protuberance (36) is centered on the platform (34).

3. The propulsion unit (10) according to any of claims 1 to 2, **characterized in that** the protuberance (36) has a convex shape.

4. The propulsion unit (10) according to any one of the preceding claims, **characterized in that** the platform (34) has a stiffness greater than a stiffness of the tubular body.

5. The propulsion unit (10) according to any one of the preceding claims, **characterized in that** the platform (34) has a width greater than a half of the diameter (D) of the tubular body (28).

6. The propulsion unit (10) according to any one of the preceding claims, **characterized in that** the tubular body (28) comprises walls having a thickness called the first thickness and **in that** the platform (34) has a thickness called the second thickness less than said first thickness.

7. The propulsion unit (10) according to any one of the preceding claims, **characterized in that** the platform (34) is covered with an anti-friction material.

8. The propulsion unit (10) according to any one of the preceding claims, **characterized in that** the platform (34) lies in a plane called the first plane (P) and the fixing part (32) lies in a plane called the second plane (P'), said first plane and second plane being parallel.

9. The propulsion unit (10) according to claim 8 **characterized in that** the fixing part (32) comprises two lateral tabs (32A, 32B) intended to be engaged in C-shaped rails.
